# EUROPEAN PATENT APPLICATION

(11) **EP 3 929 493 A1**
(43) Date of publication of application: **29.12.2021**
(21) Application number: 21181599.8
(22) Date of filing: 24.06.2021
(51) Int. Cl.: F24D 3/14, E04F 15/00, E04F 15/02, F24D 3/12

(54) **A BUILDING MEMBER FOR UNDERFLOOR HEATING**

(30) Priority: 26.06.2020 GB 202009807
(71) Applicant: Polypipe Limited, Doncaster, Yorkshire DN12 1ES (GB)
(72) Inventor: REANEY, Matthew, Doncaster, DN12 1ES (GB); COOMBES, Giles, Doncaster, DN12 1ES (GB); COY, Andrew, Doncaster, DN12 1ES (GB); BRISTOW, Adrian, Doncaster, DN12 1ES (GB)
(74) Representative: Oxley, Robin John George

(57) **Abstract**

A building member (10) for supporting an underfloor heating panel (40) located under a floor (44), the building member (10) comprising: a body (12) providing a rigid support for supporting the floor (44); and a supporting member (20) attached to said body (12) for supporting at least a part of the underfloor heating panel (40) located on said supporting member (20) beside the body (12), below the floor (44), wherein the body (12) comprises two opposing side members (14) and a transverse member (16) connecting said side members (14); wherein the supporting member (20) is connected to an upper part of the respective side member (14) such that the building member (10) is formed to be locatable, in use, on a mount (34) for supporting the building member (10).

## Description

### Field

This invention relates to a building member. More particularly, a building member for under a floor and for supporting an underfloor heating panel located under the floor.

### Background

Traditional floor constructions typically include a floor comprising flooring panels, for example chipboard panels attached directly to floor support members, for example in the form of support members, for example wooden joists or battens below. The joists are spaced apart and provide support for the flooring panels. Insulation may be provided under the flooring panels to provide for both sound and heat insulation. Furthermore, underfloor heating may be provided under the flooring panels.

The void under a flooring panel may vary in size due to the depth of the supporting joists. In the alternative, a concrete form may be provided, in which a void or recess is formed to receive insulation material or underfloor heating panels. The use of standard sizes of insulation material which are not matched to the depth of the void may result in insufficient insulation. Furthermore, if the underfloor heating panels are not matched to the depth of the void then heat may not be transmitted effectively to the floor.

The present invention seeks to overcome or ameliorate at least some of the problems associated with the known art.

### Summary

According to a first aspect of the invention, there is provided a building member for supporting an underfloor heating panel located under a floor. The building member may comprise a body providing a rigid support for supporting the floor. It may comprise a supporting member attached to said body, which may be for supporting at least a part of the underfloor heating panel located on said supporting member beside the body. It may be located below the floor. The body may comprise two opposing side members and may comprise a transverse member connecting said side members. The supporting member may be connected to an upper part of the respective side member, and may be arranged such that the building member is formed to be locatable, in use, on a mount for supporting the building member.

This may have an advantage that the supporting members may support underfloor heating panels between bodies of building members. Furthermore, the supporting members are compatible with the mounts for supporting the building member.

The supporting member may comprise a transverse portion extending away from the respective side member and connected to an intermediate portion of the supporting member extending in substantially the same direction as the side members extend; wherein the supporting member may comprise a flange member connected to the intermediate portion for the underfloor heating panel to be located thereon; wherein the respective side member, the transverse portion and the intermediate portion may define a recess for receiving at least part of the mount.

The transverse portion may be in the same plane as the transverse member.

The side members may be substantially parallel and/or the intermediate portion may be substantially parallel to the side members.

The flange member may be angled, upwardly in use, towards the plane of the transverse member.

The flange member may comprise a tip which is parallel to the plane of the transverse member.

The supporting member may be configured, in use, to bias the underfloor heating panel toward the floor. This may ensure that the underfloor heating panel is kept in contact with the underside of the floor to ensure effective heat transmission.

The body may be integral with the supporting member. This may have an advantage that the opportunity for numerous separate components to rub against each other when movement of loading occurs is significantly reduced. This in turn may reduce the opportunity for noise to be created by the building member itself.

The body may be formed with a closed cross-section. The body may comprise a base member connecting the side members.

The transverse member may comprise at least one marking showing the centre and/or the side members of the body. This may have an advantage of allowing flooring panel edge alignment and/or screw placement at installation.

The at least one marking may comprise a groove or grooves along part of or all of the length of the building member.

The body may comprise at least one rib on the transverse member between the side members, the width of the at least one rib may extend only partially the width of the side members. The width of the at least one rib may be in a range of 2.0mm-20.0mm. The width of the at least one rib may be 5.0mm.

The body may comprise a plurality of ribs located along substantially all of the width of the transverse member with spaces in between each of the plurality of ribs. This may have an advantage of maintaining a reasonable level of material wall thickness and avoiding manufacturing complications.

The body may be provided with one or more reinforcement ribs extending substantially the same width as the side members.

The mount may comprise compressible material and/or acoustic damping material. The mounts may reduce noise transmission.

The mount may comprise an upstand. The mount may comprise a plurality of upstands. The mount may comprise two, three or four upstands. The upstands may define a channel for receiving the body of the building member. The supporting member may be compatible with the upstands of the mount. The supporting member may be compatible with many different types of mounts.

Supporting members may be provided on opposing sides of the body.

The mount, in use, may be locatable within a 'U'-shaped recess defined by the opposing side members, and respective transverse portions and intermediate portions of the supporting members.

The building member may be at least one of elongate, formed of extruded plastic, and formed of resilient material.

The supporting member may be for supporting at least a part of an underfloor panel or an underfloor cooling panel located on said supporting member beside the body, below the floor. The building member may be used with an underfloor panel, an underfloor heating panel and/or an underfloor cooling panel being supported by the supporting member under the floor.

One or more of the building member, the body, the supporting member(s), the side members, the transverse member, the base member, the reinforcement rib, the transverse portion, the intermediate portion, the flange member and the tip of the flange member may have a thickness(es) in a range of one of 1.0mm to 6.0mm, 2.0mm to 3.5mm, 2.0mm to 2.5mm. The 1mm to 6mm range may be considered as a potential range for all parts of the building member, whether they are structural or supporting the underfloor heating panel. The thickness of the supporting member may be 2.0mm. The thickness of the body (e.g. the side members and the transverse member) may be one of 2.0mm, 2.5mm, 3.0mm and 3.5mm.

The thicknesses of (parts of) the supporting member(s) and (parts of) the body may be the same.

The thicknesses of (parts of) the supporting member(s) and (parts of) the body may be different. The thicknesses of (parts of) the body may be thicker than the (parts of) the supporting member(s). The side members may be thicker than the supporting member(s).

The reinforcement rib may be thinner than the side members. The thickness of the reinforcement rib may be one of 2.0mm, 2.5mm and 3.0mm.

The side members and/or the reinforcement rib may be thicker than the transverse member and/or the base member.

The thickness of the (parts of) the body and/or the (parts of) the supporting member(s) may taper from one end to the other or from the middle to either end.

The building member, the body and/or the supporting member(s) may be made from PVC or a different polymer. Additives may be used in the polymers such as glass fibres to improve strength. The building member, the body and/or the supporting member(s) may be made from extruded aluminium or fibreglass made through pultrusion.

According to a second aspect of the invention, there is provided a use of a building member as described above to support an underfloor heating panel or underfloor cooling panel located under a floor. The building member may be used to support an underfloor panel. The building member may be used without an underfloor panel (e.g. underfloor heating panel) being supported by the supporting member under the floor.

According to a third aspect of the invention, there is provided a floor assembly comprising a building member as described above, and at least one mount for supporting the building member.

The floor assembly may further comprise at least one underfloor heating or cooling panel, wherein the underfloor heating or cooling panel may comprise troughs for receiving underfloor heating or cooling pipes.

The floor assembly may further comprise an underfloor heating or cooling pipe assembly mounted in the underfloor heating or cooling panel.

According to a fourth aspect of the invention, there is provided a building member for being located under a floor. The building member may comprise a body providing a rigid support for supporting the floor. The body may comprise two opposing side members and may comprise a transverse member connecting said side members.

The building member may be formed to be locatable, in use, on a mount for supporting the building member.

The body may be formed with a closed cross-section. The body may comprise a base member connecting the side members.

The transverse member may comprise at least one marking showing the centre and/or the side members of the body. This may have an advantage of allowing flooring panel edge alignment and/or screw placement at installation.

The at least one marking may comprise a groove or grooves along part of or all of the length of the building member.

The body may comprise at least one rib on the transverse member between the side members, the width of the at least one rib may extend only partially the width of the side members. The width of the at least one rib may be in a range of 2.0mm-20.0mm. The width of the at least one rib may be 5.0mm.

The body may comprise a plurality of ribs located along substantially all of the width of the transverse member with spaces in between each of the plurality of ribs. This may have an advantage of maintaining a reasonable level of material wall thickness and avoiding manufacturing complications.

The body may be provided with one or more reinforcement ribs extending substantially the same width as the side members.

One or more of the building member, the body, the side members, the transverse member, the base member, and the reinforcement rib, may have a thickness(es) in a range of one of 2.0mm to 6.0mm, 2.0mm to 3.5mm, 2.0mm to 2.5mm. The thickness of the body (e.g. the side members and the transverse member) may be one of 2.0mm, 2.5mm, 3.0mm and 3.5mm.

The thicknesses of (parts of) the body may be the same. The thicknesses of (parts of) the body may be different.

The reinforcement rib may be thinner than the side members. The thickness of the reinforcement rib may be one of 2.0mm, 2.5mm and 3.0mm.

The side members and/or the reinforcement rib may be thicker than the transverse member and/or the base member.

The thickness of the (parts of) the body may taper from one end to the other or from the middle to either end.

The body may be made from PVC or a different polymer. Additives may be used in the polymers such as glass fibres to improve strength. The body may be made from extruded aluminium or fibreglass made through pultrusion.

According to a fifth aspect of the invention, there is provided a computer program comprising computer executable instructions that, when executed by a processor, cause the processor to control an additive manufacturing apparatus to manufacture the building member as described above.

According to a sixth aspect of the invention, there is provided a method of manufacturing a device via additive manufacturing, the method comprising: obtaining an electronic file representing a geometry of a product wherein the product is a building member as described above; and controlling an additive manufacturing apparatus to manufacture, over one or more additive manufacturing steps, the product according to the geometry specified in the electronic file.

### Brief Description of the drawings

Embodiments of the invention will now be described, purely by way of example, with reference to the accompanying drawings, in which:
Figure 1 is an end view of an embodiment of a building member according to the invention;
Figure 2 is a perspective view of the embodiment of Figure 1;
Figure 3 is a close up perspective view of part of the embodiment of Figure 1 as shown in Figure 2;
Figure 3A is an end view of another embodiment of a building member according to the invention;
Figure 4 is an exploded perspective view of an underfloor heating assembly according to an embodiment of the invention including an embodiment of a building member according to Figure 1;
   Figure 5 is an assembled perspective view of an underfloor heating assembly according to an embodiment of the invention including an embodiment of a building member according to Figure 1.
Figure 6 is an exploded perspective view of an underfloor heating assembly and floor according to an embodiment of the invention including an embodiment of a building member according to Figure 1;
Figure 7 is an assembled perspective view of an underfloor heating assembly and floor according to an embodiment of the invention including an embodiment of a building member according to Figure 1.

### Detailed Description

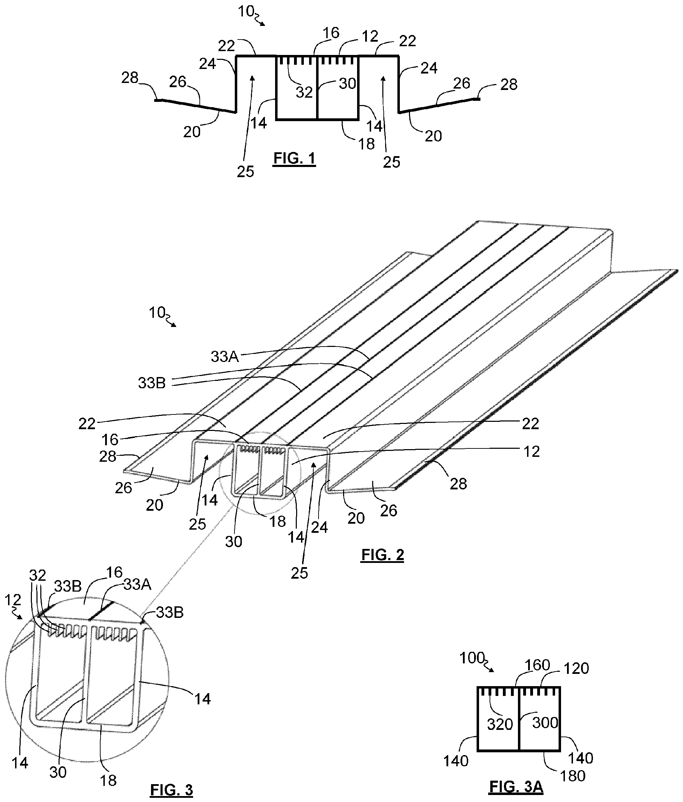

An embodiment of a building member 10 according to the invention is shown in Figure 1.

The building member 10 comprises an elongate body 12 with a length of the body 12 extending into the page (i.e. a horizontal direction). The body 12 comprises substantially parallel spaced side members 14 and a transverse member 16 adjoining respective edges of one pair of longitudinal edges of the side members 14 and a base member 18 adjoining the other pair of respective longitudinal edges of the side members 14 such that a substantially rectangular (or square) closed cross section is formed. The side members 14 may be considered to be extending in the vertical direction. In the embodiment shown, the cross section is hollow, which may serve to reduce weight and materials. It will be appreciated that, in other embodiments, that the body may be open on one side, i.e. including only a transverse member and side members and not including a base member. However, a closed cross section may provide additional rigidity and strength over an open cross section.

The transverse member 16 and the base member 18 are substantially planar and are thin relative to their width and length and have a substantially constant thickness.

The faces of the side members 14 may be substantially parallel as shown in the embodiment of Figure 1 such that the distance between the side members 14 is the same along their full width. The width of the side members 14 being taken in the vertical direction (i.e. from the transverse member 16 to the base member 18).

It will be appreciated that, in other embodiments, the distance between the side members may e.g. increase or decrease away from the transverse member. That is, the cross section of the body may be a trapezium, or, more particularly, an isosceles trapezium, with the transverse member and the base member being parallel to each other.

The body 12 is provided with two supporting members 20, one either side of the body 12. That is, supporting members 20 are provided on opposing sides of the body 12. Each supporting member 20 comprises a transverse portion 22 extending away from the respective side member 14. The transverse portion 22 is joined to the transverse member 16 at their respective ends and extends in the same direction as the transverse member 16. The transverse portion 22 is in the same plane as the transverse member 16. The transverse portion 22 is connected to an intermediate portion 24 extending in substantially the same direction as the side members 14 extend. That is, the intermediate portion 24 is joined to the transverse portion 22 at their respective ends and extends perpendicularly away from the transverse portion 22. The transverse portions 22 and intermediate portions 24 are thin relative to their width and length and they have a substantially constant thickness. It will be appreciated that, in other embodiments, the intermediate portions may not be perpendicular to the transverse portion. That is, there may be angle between an intermediate portion and a transverse portion of substantially 90° or close to 90° (e.g. 89° or 91 ° etc.), with the intermediate portion pointing substantially downwards (i.e. away from the transverse portion).

The supporting member 20 is connected (joined) to the side member 14 at or near the top of the side member 14 (i.e. at its most vertical point where the side member 14 joins the transverse member 16). The supporting member 20 may be considered to extend from or near the top of the side member 14. More generally, the supporting member 20 may be joined to the side member 14 in an upper part of the side member 14. The upper part may be defined to be an upper quarter (1/4), an upper half (1/2), or an upper three quarters (3/4) of the side member 14.

The supporting member 20 and the body 12 of the building member 10 are integral. That is, they are a single component and are formed integrally. This may have an advantage that the opportunity for numerous separate components to rub against each other when movement of loading occurs is significantly reduced. This in turn reduces the opportunity for noise to be created by the building member itself.

As can be seen from Figure 1, the respective side member 14, transverse portion 22 and intermediate portion 24 define (i.e. form) a recess 25 in the building member 10. That is, each building member 10 has two recesses 25 which extend along the full length of the building member 10. The recesses 25 are created as the building member 10 is formed.

Each supporting member 20 comprises a substantially planar flange member 26 connected to the respective intermediate portion 24. In other embodiments, it will be appreciated that the flange member may be curved rather than planar. The flange members 26 are arranged at an angle less than 90 degrees to their respective intermediate portion 24. In other words, the free end of each flange member 26 is closer to the plane of the transverse member 16 than is the join between flange member 26 and intermediate portion 24. In the embodiment shown, the flange members 26 are attached to the bottom of the intermediate portions 24.

In the embodiment shown, a supporting member 20 is provided on either side of the body 12. However, a body with a single supporting member and/or a single flange member is foreseen, which e.g. may be used adjacent the side of a room in which flooring panels are laid. It will be appreciated that the supporting members 20 and/or flange members 26 may be removed (e.g. cut off). This may be formed as a sacrificial portion with a region of reduced strength in order to form a predetermined break line of removal of the respective supporting member 20 and/or flange member 26. This may be removed by the installer or off site. The removal of a supporting member and/or flange member may be for use of the building member in areas where the underfloor heating board support is not required or to allow for the use of the building member tight up to the perimeter of the room. Furthermore, it will be appreciated that the building member may be manufactured with a single supporting member and/or a single flange member.

The flange members 26 have a generally flat upper surface. The flange members 26 also have a generally flat lower surface. The flange members 26 are thin relative to their width and length and they have a substantially constant thickness.

In use, at least part of an underfloor heating panel may be supported by the supporting member 20, or more particularly, the flange member 26. That is, in use, an underfloor heating panel may be located on the flange member 26.

The flange member 26 is angled toward the plane of the transverse member 16, and when, in use, an underfloor heating panel is located on the flange member 26, the flange member 26 biases the underfloor heating panel toward a flooring panel located above the building member 10.

The flange member 26 comprises a tip 28 which extends away from the intermediate portion 24. The tip 28 is substantially parallel to plane of the transverse member 16 (albeit not located below the transverse member 16). That is, the tip 28 of the flange member 26 is not angled towards the plane of the transverse member 16. This provides a flat horizontal surface (parallel to the ground) for the underfloor heating panel to be located on. The flat surface provides a larger contact area to support the underfloor heating panel. This may be particularly useful if the underfloor heating panel is made from a material that material that may deform e.g. Expanded Polystyrene (EPS). It will be appreciated that, in some embodiments, the flange member may not comprise a tip that has a surface parallel to the ground.

The building member 10 may be made from a plastics material. The building member 10 and the supporting member 20 may be formed of a resilient plastics material such that the flange members 26 further bias the underfloor heating panel toward the flooring panel when in use. Alternatively, the building member may be formed of a rigid material. Alternatively, materials of different degrees of rigidity may be used for different aspects of the building member.

On the body 12, a vertical reinforcement rib 30 is provided between the transverse member 16 and the base member 18. The reinforcement rib 30 extends substantially the same width (i.e. in the vertical direction) as the side members 14 and is located approximately midway between the side members 14. The reinforcement rib 30 provides structural rigidity to permit loading on the building member 10 from a flooring panel above. Although only one reinforcement rib 30 is shown in Figure 1, it will be appreciated that, in other embodiments, a plurality of reinforcement ribs 30 may be provided. In addition, in other embodiments, there may be no reinforcement ribs provided.

In addition, on the body 12, located between the side members 14 on the bottom side of the transverse member 16 are a plurality of ribs 32. More precisely, five ribs 32 are located between one side member 14 and the reinforcement rib 30 and five ribs 32 are located between the other side member 14 and the reinforcement rib 30. Each rib 32 extends along substantially all of the length of the transverse member 16. The ribs 32 extend along substantially all of the width of the transverse member 16. There are spaces in between each of the ribs 32 (and the respective rib 32 and the adjacent side members 14 or reinforcement rib 30). Although ten ribs 32 are shown in Figure 1, it will be appreciated that, in other embodiments, a different number of ribs may be used.

The width of the ribs 32 (in the vertical direction) is less than the width of the side members 14 (and the reinforcement rib 30). The width of the ribs 32 extend only partially the width of the side members 14 (and the reinforcement rib 30). That is, the ribs 32 extend only a relatively small distance when compared to the side members 14 (and the reinforcement rib 30). In an embodiment, the width of the ribs 32 may be 5.0mm. In other embodiments, the width of one or more of the ribs 32 may be in a range of 2.0mm-20.0mm.

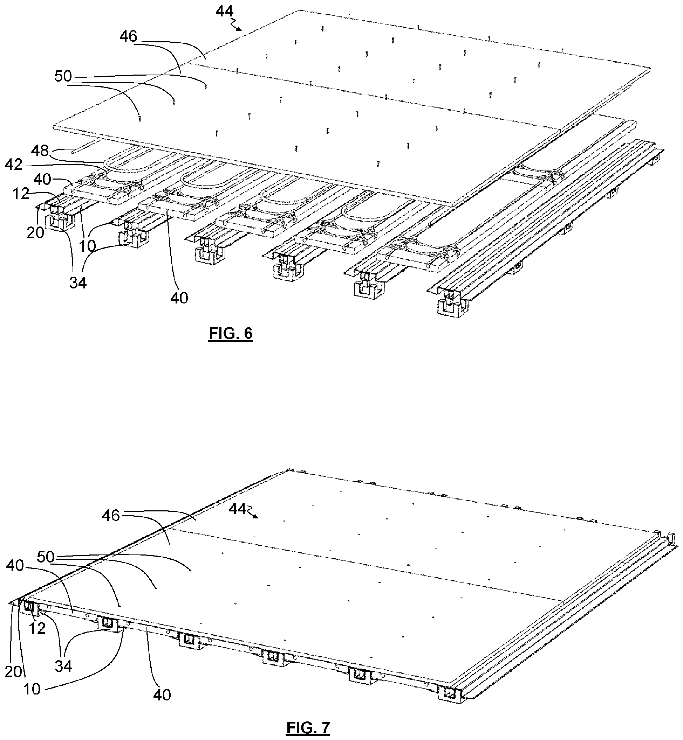

The ribs 32 may be considered to be a series of comb-like ribs on the bottom surface of the transverse member 16 of the body 12. The ribs 32 provide additional material in the area where the thread of screws (see Figures 6 and 7) will be present. The screws may be used to fix the floor or flooring panels to the body 12. The ribs 32 maintain a reasonable level of material wall thickness of the transverse member 16 and avoid manufacturing complications. That is, the ribs 32, with the spaces between them, means that there is enough material for the screws to take hold of but the wall thickness of the transverse member 16 does not need to be the same as the full width of the ribs 32 along the full width of the transverse member 16. This minimises the bulk of material in an area where a thick wall could cause cooling issues and ultimately lead to deformation and potential loss of dimensional stability/accuracy of parts.

As shown in Figure 2, the building member 10 is of constant cross-section along its length. The building member 10 of the present embodiment is elongate and formed by a plastic extrusion process. The building member 10 may be fully extruded and all internally extruded.

The upper surface of the transverse member 16 of the body 12 includes a central groove 33A and two side grooves 33B along the full length of the building member 10. The central groove 33A and two side grooves 33B may be considered to be markings which show the centre and outside of the body 12. It will be appreciated that the centre of the body 12 corresponds to the location of the reinforcement rib 30 and the outside of the body 12 corresponds to the location of the side members 14. Although, three grooves are shown in Figure 2, it will be appreciated that, in other embodiments, different numbers and/or types of marking may be used to show the extent of the body. Furthermore, in embodiments, the markings may only extend partially along the length of the building member.

The markings indicating the location of the centre and sides of the body 12 allows an installer to see (from above) where the transverse member 16 ends and the transverse portion 22 of the supporting member 20 begins. This means that they are able to e.g. screw the floor or flooring panels to the building member 10 in the correct place using the markings.

Figure 3 shows a close up of the part of the building member 10 shown in the circle in Figure 2. The end of the body 12 is shown in more detail which provides a clearer view of the reinforcement rib 30, the ribs 32, and the grooves 33A, 33B.

In embodiments, the thicknesses of the supporting members 20 (i.e. the parts of the supporting member 20) and the body 12 (i.e. the parts of the body 12) may be the same. That is, the thicknesses of the side members 14, the transverse member 16, the base member 18 and the reinforcement rib 30 may be the same as the thicknesses of the transverse portion 22, the intermediate portion 24, the flange member 26 and the tip of the flange member 28.

In other embodiments, the thickness of the supporting members 20 and the body 12 may be different, e.g. the thickness of the supporting members 20 (i.e. the parts of the supporting member 20) may be less than the thickness of the body 12 (i.e. the parts of the body 12). This may be because the side members 14 and the reinforcement rib 30 may be doing the majority of the structural work whilst the supporting members 20 provide support to the underfloor heating panels.

As examples, thicknesses of the supporting members 20 and/or body 12 may be in a range of 1.0mm to 6.0mm. There may be a practical upper limit of around 6.0mm based on the extrusion process and cost of the material. More particularly, the thickness of the body 12 may be in range of 2.0mm to 3.5mm. Even more particularly, the thickness of the body 12 may be in a range of 2.0mm to 2.5mm. The thickness of the supporting member may be 2.0mm as this may be acceptable to support the underfloor heating panels.

In general, in embodiments, one or more of the thicknesses of the side members 14, the transverse member 16, the base member 18, the reinforcement rib 30, the transverse portion 22, the intermediate portion 24, the flange member 26 and the tip of the flange member 28 may be different from one or more of the other parts of the body 12 and/or the supporting member 20.

For example. in embodiments, the reinforcement rib 30 may be thinner than the side members 14. This may have an advantage that it reduces the sink marking on the outside surface of the body 12. Sink marks may be an area where the surface is deformed into a depression which may be caused by uneven cooling of the material. Sink marks commonly occur where, for example, a rib joins perpendicularly to a wall creating a localised thickened area. This may be minimised by ensuring the perpendicular rib is a proportion of the thickness of the wall it abuts.

In embodiments, the side members 14 may have a thickness of 3.5mm and/or the reinforcement rib 30 may have a thickness of 3.0mm. In other embodiments, the side members 14 may have a thickness of 2.5mm and/or the reinforcement rib 30 may have a thickness of 2.0mm. In other embodiments, the thickness of the side members 14 may be greater than 2.5mm or 3.5mm and/or the thickness of the reinforcement rib 30 be greater than 2.0mm or 3.0mm. That is, they may be thickened to increase structural strength. In embodiments, the reinforcement rib may be 2.5mm.

As another example. in embodiments, there may be a difference in thickness between the horizontal and vertical parts of the body 12. That is, the transverse member 16 and/or the base member 18 may be thinner than the side members 14 and/or the reinforcement rib 30. This may be because the vertical parts of the body 12 do most of the work structurally, and the largest gain may be made in thickening those with the potential to leave the horizontal parts of the body 12 thinner to save material and cost. In addition, this thickening may not necessarily be a uniform thickening and could taper from one end to the other or from the middle to either end. Thus, in embodiments, the transverse member 16, the base member 18, the side members 14 and/or the reinforcement rib 30 may not have a substantially constant thickness along their width.

The building member 10 (the body 12 and/or the supporting members 20) may be made from PVC. In other embodiments, different polymers may be used. Other polymers would give different strength results. In embodiments, additives may be used in the polymers such as glass fibres to improve strength. In embodiments, instead of plastic, the building member 10 (the body 12 and/or the supporting members 20) may be made from extruded aluminium or fibreglass made through pultrusion.

Figure 3A shows an embodiment in which a building member 100 is provided without either of the supporting members. That is, the building member 100 comprises only a body (i.e. a batten 120) for providing a rigid support for supporting a floor. As mentioned above, this may be in the situation where support for the underfloor heating panels using the supporting members is not required or desired. The batten 120 may be manufactured in this way or the supporting members may be removed (e.g. cut off) after it has been made (e.g. on site). The batten 120 is elongate with a length of the batten 120 extending into the page (i.e. a horizontal direction). The batten 120 may serve as a a floor support member.

Similarly as with the building member 10 of Figure 1, the batten 120 comprises two opposing side members 140. Furthermore, the batten 120 includes a transverse member 160 and a base member 180 connecting the side members 140. In embodiments, the batten 120 includes a vertical reinforcement rib 300 provided between the transverse member 160 and the base member 180.

It will be appreciated that any of the features (and advantages) mentioned with respect to the building member 10 with the supporting members 20 that may be applicable to the batten 120 may be included in, or used for, the batten 120. For example, the transverse member 160 of the batten 120 may comprise at least one marking (not shown) indicating the centre and/or the side members 160 of the batten 120. Furthermore, the batten 120 may comprise a plurality of (comb-like) ribs 320 between the side members 140 on the bottom side of the transverse member 160 of the batten 120. In addition, it will be appreciated that the shapes and sizes of the parts of the body (e.g. thicknesses of the transverse member, the side members, the reinforcement rib and/or the base member) mentioned with respect to the building member 10 having the supporting members 20 may be used for the batten 120. In embodiments, the building member 100 may be supported on the mount 34.

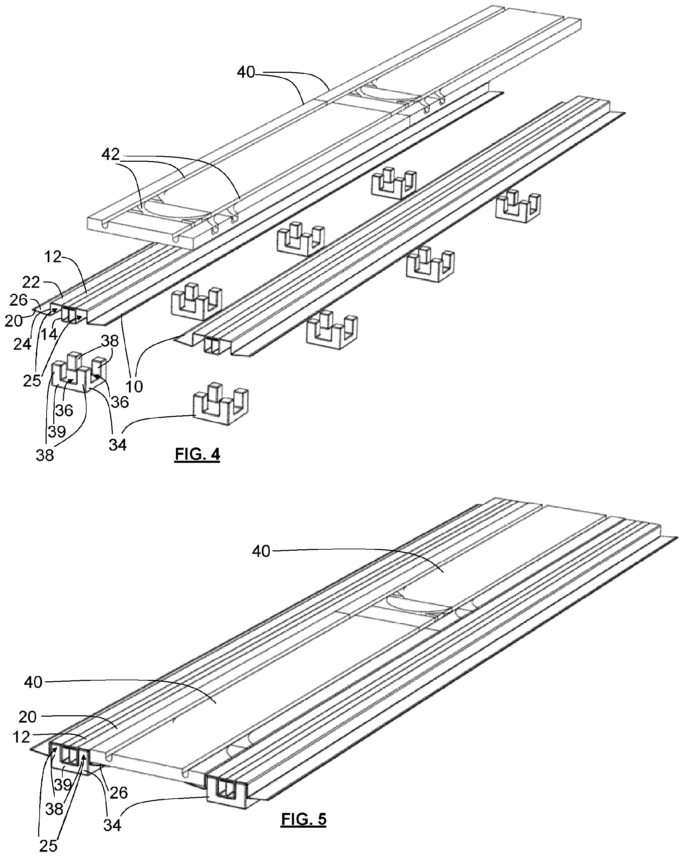

Figure 4 shows an exploded underfloor assembly according to an embodiment of the present invention.

The body 12 of the building member 10 serves as a floor support member such that no separate floor support member, e.g. joist, is required.

The use of a building member 10 in accordance with an embodiment of the invention will now be described.

The assembly of the embodiment comprises a plurality of spaced building members 10 each supported by mounts 34. Mounts 34, for example formed of rubber or a plastics material, are positioned on a preferably flat ground or floor surface at spaced intervals. The material of the mounts 34 may be considered to be acoustic damping material. Each mount 34 is formed with a channel 36 for receiving the body 12 of the building member 10, within the channel 36, so that each body 12 is supported at spaced intervals along its length. The body 12 is formed to be locatable, in use, on the mounts 34 for supporting the building member 10. In the embodiment shown, each body 12 is supported by four mounts 34 but it will be appreciated that, in other embodiments, a different number of mounts (e.g. 1, 2 or 3) may be used. In the embodiment shown, the mount 34 comprises two channels 36, which are orientated perpendicular to each other. It will be appreciated that, in some embodiments, there may be single channel in a mount.

The use of rubber or plastic mounts 34 provides good damping properties and helps to dampen vibration of the building members 10 and whatever the building members 10 are supporting. The mounts 34 also provide good acoustic properties, such as acoustic damping.

The mount 34 includes four upstands 38, one positioned at each corner of the mount 34 extending from a mount base 39 with a square cross section. In other embodiments, the mount base may have a rectangular cross section. In this embodiment, the four upstands 38 define the channels 36, i.e. such that both of the channels 36 are perpendicular to each other. It will be appreciated that only one channel 36 may be used at a time to support the body 12, although either of the channels 36 could be used due to the symmetry of the mount 34, i.e. the channels 36 are dimensionally the same. Although, in this embodiment, there are four upstands 38 for each mount 34, in other embodiments, there may be a different number, such as two upstands.

In some cases (such as at the perimeter of a room) one of the channels 36 in the mount 34 may be used parallel to a wall with a first body 12 of a first building member 10 inserted within the channel 36. Then, a second body 12 of a second building member 10 may be inserted into one half of the other channel 36 of the mount 34 and butted up to the first body 12, perpendicular to it and forming a T shape. In this case, at least part of one or both supporting members 20 of the first and/or second building member 10 may need to be cut away or not included so that the second body 12 of the second building member 10 can be located in the other channel 36. In some embodiments, the first building member may be replaced with a building member without the supporting members (i.e. a batten). In this case, the supporting members 20 of the second building member 10 may not need to be cut away so that the second body 12 of the second building member 10 may be located at least partially in the other channel 36. The batten may be solid or may have a hollow cross section.

It will be appreciated that the building member may be compatible with many different types of mounts. That is, the building member may be used with mounts with e.g. different sizes or shapes of the mount base or of the upstands of the mount. As examples, in other embodiments, the upstands of the mount may not extend as far vertically, may not be as thick in a horizontal direction, or may have some rounded edges. The dimensions of the mount may be based around the size/shape of a standard batten.

It will be appreciated that the body 12 of the building member may correspond to the dimensions of a standard batten, but may also have a different size or shape as desired.

As mentioned previously, respective side members 14, transverse portions 22 and intermediate portions 24 define (i.e. form) recesses 25 in the building member 10. These recesses 25 are for receiving at least part of the mount 34. That is, the upstands 38 of the mounts 34 are received in the recesses 25 such that the body 12 may be supported by the mounts 34. The underside of the transverse portion 22 lies close to or flush atop the upper surface of the upstands 38 of the mounts 34. However, preferably, the upstands 38 may not provide support to the floor or flooring panels above the building member 10. That is, preferably, the load of the floor or flooring panels should be supported by the body 12 only and the weight of the floor or flooring panels is only transferred through the body 12. However, the upstands 38 may support the supporting members 20 and thus the weight of the underfloor heating panels. In some embodiments, there may be a gap between the underside of the transverse portion and the upper surface of the upstands.

The upstands 38 being located in the recesses 25 prevent lateral movement of the building member 10 with respect to the mounts 34. The intermediate portion 24 may come into contact with one side of the upstand 38 and the respective side member 14 may come into contact with the opposing side of the upstand 38. That is, the mount can engage with the side members 14 and also the intermediate portions 24. Thus, lateral movement is restricted in both directions. The recesses 25 being formed in the building member 10 means that the building member 10 is formed ready to be supported by the mounts 34 with no additional modification required, e.g. no cut-outs need to be made in the length of the building member 10.

The recesses 25, together, may be considered to be a 'U'-shaped recess formed by the opposing side members 14, and respective transverse portions 22 and intermediate portions 24. In use, the mount 34 is locatable within the 'U'-shaped recess.

In use, the mounts 34 are positioned in the desired locations on a surface spaced apart from each other. Then the building members 10 are lowered onto the mounts 34 so that the body 12 is located in the channel 36 of the mount 34 and the upstands 38 are located in the recesses 25 of the building member 10. Alternatively, it will be appreciated that the mounts 34 may be inserted in the recesses 25 (the body 12 being inserted in the channel 36 at the same time) and then the building members 10 and mounts 34 together may be located in the desired position.

Next, an underfloor heating panel 40 is lowered onto the flange members 26 of the supporting members 20 so that each longitudinal edge of the underfloor heating panel 40 is supported by the flange member 26 of the supporting member 20 forming part of the building member 10. The underfloor heating panel 40 may be insulated and may be considered to be an insulation panel. In other embodiments, the panel being supported by the building member may be a different type of panel from an underfloor heating panel. For example, the panel may be an insulation panel without troughs for carrying pipes. More generally, it may be an underfloor panel.

Furthermore, it will be appreciated that, in other embodiments, the building member may be used as a flooring support in its own right, i.e. without the underfloor heating panels located under the floor. That is, the building member may form part of a suspended floor system. In this case, the only difference may be that there are no underfloor heating panels (or other types of underfloor panels) located on the supporting members. The building member may otherwise be located and fixed in the same way. The floor or floor panels may be located on the building member.

In the embodiment shown in Figure 4, each underfloor heating panel 40 has troughs 42 in its upper surface for receiving heating pipes (see Figure 6). The heating pipes may be used for carrying liquid (e.g. water) that may be heated and then fed through the pipes to heat the floor from underneath. The troughs 42 have a depth such that when heating pipes are received in the troughs 42, the tops of the heating pipes are level with the upper surface of the underfloor heating panel 40. To provide underfloor heating, heating pipes are located into the troughs 42 of the insulated underfloor heating panels 40.

Figure 5 shows an assembled underfloor assembly according to an embodiment of the present invention. That is, the underfloor heating panels 40 are located partially on the flange members 26 of the supporting members 20, the upstands 38 of the mounts 34 are located in the recesses 25 of the building member 10, and the body 12 of the building member 10 is located in the channel 36 of the mounts 34. Thus, the mounts 34 are supporting the bodies 12, which are connected to the respective supporting members 20, which are in turn supporting the underfloor heating panels 40.

Figure 6 shows an exploded underfloor assembly and a floor 44 according to an embodiment of the present invention.

Once the underfloor assembly is assembled, the next step is for flooring panels 46 to be lowered onto the building members 10 transverse to the longitudinal direction of the bodies 12 so that the flooring panels 46 span the gap between any two neighbouring building members 10. This arrangement allows the heating pipes 48, which are level with the upper surface of the underfloor heating panel 40 (when they are located in the troughs 42), to be in contact with the underside of the flooring panel 46. The flooring panels 46 form the floor 44. Although flooring panels are mentioned here, it will be appreciated that, in embodiments, a floor above the building member may be formed in many different ways as will be apparent to a skilled person. Thus, use of the wording floor and flooring panel may be considered to be interchangeable as applicable.

Before the flooring panels 46 are lowered into position, the top surface of the underfloor heating panel 40 which is supported between two flange members 26 of neighbouring building members 10 may be above a notional plane formed between the top surfaces of neighbouring building members 10. Screws 50 are provided to fix the flooring panels 46 to the body 12. It will be appreciated that, in other embodiments, other fixing means may be used to fix the floor to the building members. The markings (i.e. grooves 33A, 33B) on the building member 10 may be used to align the flooring panels 46 and/or the screws 50 so that they are fitted in the correct position.

When flooring panels 46 are lowered into position, the flooring panels 46 displace the underfloor heating panel 40 downwards. The flange members 26 bias the underfloor heating panel 40 toward the flooring panel 46. The thickness of the underfloor heating panel 40 or the distance between the flange member 26 and the transverse member 16 may be chosen such that the flange members 26 bias the underfloor heating panel 40 upwards into contact with the bottom surface of the flooring panels 46. That is, the distance between the transverse member 16 and the uppermost point of the flange member 26 may be slightly less than the thickness of the underfloor heating panel 40. This serves to provide a tight contact and improved heat transfer from the heating pipes 48 to the flooring panels 46. That is, a small amount of compression is maintained to keep the underfloor heating panel 40 in contact with the underside of the flooring panels 46 and ensuring effectively heat transmission into the floor structure.

Figure 7 shows an assembled underfloor assembly and floor 44 according to an embodiment of the present invention. That is, the heating pipes 48 are located in the troughs 42, and the flooring panels 46 are located on top of the building members 10 and the underfloor heating panels 40.

The screws 50 are shown fixing the flooring panels 46 to the body 12 of the building member 10. The screws 50 may be screwed to any part of the transverse member 16 of the body 12. The screws 50 may be screwed to the centre or central portion of the transverse member 16 of the body 12. The screws 50 may pass through the flooring panels 46 and at least partially or fully through the transverse member 16 of the body 12. The screws 50 may pass through the transverse member 16 of the body 12 and engage with the ribs 32. Preferably, the screws 50 may be screwed to the transverse member 16 between the central groove 33A and either of the side grooves 33B to ensure that the ribs 32 provide additional purchase for the threaded portions of the screw 50.

The use of suitably resilient plastics material for the building member 10 can serve to reduce transmission of vibrations to or from a flooring panel 46 supported by the building member, and may act as a damper to damp vibration of the flooring panel 46. Thus the building member 10 may serve to reduce sound transmission and is particularly useful in acoustic flooring systems.

It will be appreciated by persons skilled in the art that various modifications may be made to the above embodiment without departing from the scope of the present invention as defined by the claims. For example, whilst the above discussion has been concerned with underfloor heating, the invention is equally applicable to underfloor cooling, i.e. the pipes being used for cooling liquid. The underfloor panel may be an underfloor cooling panel.

Examples according to the disclosure may be formed using an additive manufacturing process. A common example of additive manufacturing is 3D printing; however, other methods of additive manufacturing are available. Rapid prototyping or rapid manufacturing are also terms which may be used to describe additive manufacturing processes.

As used herein, "additive manufacturing" refers generally to manufacturing processes wherein successive layers of material(s) are provided on each other to "build-up" layer-by-layer or "additively fabricate", a three-dimensional component. This is compared to some subtractive manufacturing methods (such as milling or drilling), wherein material is successively removed to fabricate the part. The successive layers generally fuse together to form a monolithic component which may have a variety of integral subcomponents. In particular, the manufacturing process may allow an example of the disclosure to be integrally formed and include a variety of features not possible when using prior manufacturing methods.

Additive manufacturing methods described herein enable manufacture to any suitable size and shape with various features which may not have been possible using prior manufacturing methods. Additive manufacturing can create complex geometries without the use of any sort of tools, molds or fixtures, and with little or no waste material. Instead of machining components from solid billets of plastic or metal, much of which is cut away and discarded, the only material used in additive manufacturing is what is required to shape the part.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Electron Beam Additive Manufacturing (EBAM), Laser Net Shape Manufacturing (LNSM), Direct Metal Deposition (DMD), Digital Light Processing (DLP), Continuous Digital Light Processing (CDLP), Direct Selective Laser Melting (DSLM), Selective Laser Melting (SLM), Direct Metal Laser Melting (DMLM), Direct Metal Laser Sintering (DMLS), Material Jetting (MJ), NanoParticle Jetting (NPJ), Drop On Demand (DOD), Binder Jetting (BJ), Multi Jet Fusion (MJF), Laminated Object Manufacturing (LOM) and other known processes.

The additive manufacturing processes described herein may be used for forming components using any suitable material. For example, the material may be plastic, metal, composite, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel^{®} available from Special Metals Corporation). These materials are examples of materials suitable for use in additive manufacturing processes which may be suitable for the fabrication of examples described herein.

As noted above, the additive manufacturing process disclosed herein allows a single component to be formed from multiple materials. Thus, the examples described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

Additive manufacturing processes typically fabricate components based on three-dimensional (3D) information, for example a three-dimensional computer model (or design file), of the component.

Accordingly, examples described herein not only include products or components as described herein, but also methods of manufacturing such products or components via additive manufacturing and computer software, firmware or hardware for controlling the manufacture of such products via additive manufacturing.

The structure of one or more parts of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product.

Design files can take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files can be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce a product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself can automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

### List of reference numerals

10 Building member
12 Body
14 Side member
16 Transverse member
18 Base member
20 Supporting member
22 Transverse portion
24 Intermediate portion
25 Recess
26 Flange member
28 Tip of flange member
30 Reinforcement rib
32 Rib
33A Central Groove
33B Side Grooves
34 Mounts
36 Channel
38 Upstands
39 Mount base
40 Underfloor heating panel
42 Trough
44 Floor
46 Flooring panels
48 Heating pipes
50 Screws
100 Building member
120 Batten
140 Side member
160 Transverse member
180 Base member
300 Reinforcement rib
320 Rib

## Claims

1. A building member for supporting an underfloor heating panel located under a floor, the building member comprising:
a body providing a rigid support for supporting the floor; and
a supporting member attached to said body for supporting at least a part of the underfloor heating panel located on said supporting member beside the body, below the floor,
wherein the body comprises two opposing side members and a transverse member connecting said side members;
wherein the supporting member is connected to an upper part of the respective side member such that the building member is formed to be locatable, in use, on a mount for supporting the building member.

2. The building member according to claim 1, wherein the supporting member comprises a transverse portion extending away from the respective side member and connected to an intermediate portion of the supporting member extending in substantially the same direction as the side members extend;
wherein the supporting member comprises a flange member connected to the intermediate portion for the underfloor heating panel to be located thereon;
wherein the respective side member, the transverse portion and the intermediate portion define a recess for receiving at least part of the mount.

3. The building member according to claim 2, wherein one or more of:
the transverse portion is in the same plane as the transverse member;
the side members are substantially parallel and/or the intermediate portion is substantially parallel to the side members;
in use, the flange member is angled, upwardly in use, towards the plane of the transverse member, and/or
the flange member comprises a tip which is parallel to the plane of the transverse member.

4. The building member according to any preceding claim, wherein one or more of:
the supporting member is configured, in use, to bias the underfloor heating panel toward the floor;
the body is integral with the supporting member, and/or
the body is formed with a closed cross-section.

5. The building member according to any preceding claim, wherein the transverse member comprises at least one marking showing the centre and/or the side members of the body, and preferably, the at least one marking comprises a groove or grooves along part of or all of the length of the building member.

6. The building member according to any preceding claim, wherein the body comprises at least one rib on the transverse member between the side members, the width of the at least one rib extending only partially the width of the side members, and preferably, the body comprises a plurality of ribs located along substantially all of the width of the transverse member with spaces in between each of the plurality of ribs.

7. The building member according to any preceding claim, wherein the body is provided with one or more reinforcement ribs extending substantially the same width as the side members.

8. The building member according to any preceding claim, wherein the mount comprises compressible material and/or acoustic damping material, and/or an upstand.

9. The building member according to any preceding claim, wherein supporting members are provided on opposing sides of the body, and preferably, when dependent on claim 2, wherein the mount, in use, is locatable within a 'U'-shaped recess defined by the opposing side members, and respective transverse portions and intermediate portions of the supporting members.

10. The building member according to any preceding claim, wherein one or more of:
the building member is at least one of elongate, formed of extruded plastic, and formed of resilient material, and/or
the supporting member for supporting at least a part of an underfloor panel or an underfloor cooling panel located on said supporting member beside the body, below the floor.

11. The use of a building member according to any preceding claim to support an underfloor heating panel or underfloor cooling panel located under a floor.

12. A floor assembly comprising a building member according to claim 1 to 10, and at least one mount for supporting the building member.

13. The floor assembly according to claim 12, comprising at least one underfloor heating or cooling panel, wherein the underfloor heating or cooling panel comprises troughs for receiving underfloor heating or cooling pipes, and preferably, further comprising an underfloor heating or cooling pipe assembly mounted in the underfloor heating or cooling panel.

14. A computer program comprising computer executable instructions that, when executed by a processor, cause the processor to control an additive manufacturing apparatus to manufacture the building member according to claim 1-10.

15. A method of manufacturing a device via additive manufacturing, the method comprising:
obtaining an electronic file representing a geometry of a product wherein the product is a building member according to claim 1-10; and
controlling an additive manufacturing apparatus to manufacture, over one or more additive manufacturing steps, the product according to the geometry specified in the electronic file.
